# FASCICULE DE BREVET EUROPEEN

(11) **EP 0 383 956 B1**
(45) Date de publication et mention de la délivrance du brevet: **27.10.1993**
(21) Numéro de dépôt: 88403135.2
(22) Date de dépôt: 09.12.1988
(51) Int. Cl.: B41M 5/24, H04N 1/04

(54) **Procédé pour l'inscription d'image par laser, et dispositifs de mise en oeuvre de ce procédé**
Verfahren zur Laserbildeinschreibung und Anordnung zur Durchführung des Verfahrens
Method for inscribing an image by laser and apparatus for carrying out this method

(43) Date de publication de la demande: 29.08.1990
(73) Titulaire: THOMSON-CSF, 75008 Paris (FR)
(72) Inventeur: Bricot, Claude, F-75008 Paris (FR)
(74) Mandataire: Benoit, Monique

(56) Documents cités:
- US-A- 4 584 612
- PATENT ABSTRACTS OF JAPAN, vol. 9, no. 183 (M-400)[1906], 30 juillet 1985; JP-A-60 52 390 (DAINIPPON INSATSU K.K.) 25-03-1985
- PATENT ABSTRACTS OF JAPAN, vol. 5, no. 190 (M-100)[862], 4 décembre 1981; JP A 56 113 494 (FUJI SHASHIN FILM K.K.) 07.09.1981
- IBM TECHNICAL DISCLOSURE BULLETIN, vol. 24, no. 2, juillet 1981, page 1259, NewYork, US; D.J. HALL et al.: "Multi-color recording medium"
- PATENT ABSTRACTS OF JAPAN, vol. 8, no. 128 (M-302)[1565], 14 juin 1984; JP-A-59 31 190 (SEKISUI KAGAKU KOGYO K.K.) 20-02-1984

## Description

La présente invention a pour objet un procédé pour l'inscription d'image par laser, ainsi que ses moyens de mise en oeuvre.

Dans la présente description, on entend généralement par image, aussi bien un graphisme qu'un texte, une photographie .....

Pour certaines applications, il est nécessaire de former une image sur un support qui soit difficilement falsifiable ou susceptible d'être contrefait.

Différents procédés sont connus à cet effet. Parmi ceux-ci, on peut citer l'impression du type billet de banque, qui utilise un procédé chimique de transfert ; différentes dispositions particulières permettent de rendre ce procédé difficilement falsifiable mais, pour certaines utilisations, sa contrefaçon reste insuffisamment difficile.

D'autres techniques, telles que celles qui sont employées pour la fabrication de disques optiques numériques, utilisent un mécanisme d'ablation d'une couche choisie pour absorber un rayonnement incident ; la couche absorbante une fois enlevée par le rayonnement, laisse apparaître ponctuellement le support, formant ainsi une image. Ces procédés ne permettent toutefois pas d'obtenir un "rendu", c'est-à-dire une qualité (définition de l'image, contraste ...), équivalent aux images réalisées par impression.

Le problème que vise à résoudre la présente invention est donc la réalisation d'une image dont le rendu soit comparable à celui de l'imprimerie, qui soit le plus difficile possible à falsifier et le plus difficile possible à contrefaire, un tel procédé de réalisation trouvant notamment son application dans la réalisation de documents de haute sécurité, comme des documents d'identité par exemple.

Le procédé selon l'invention permet de répondre à ces objectifs en utilisant :
- une première couche d'un matériau, déposée sur un support, formant deux zones, une zone image et une zone de lecture, et recouverte sur la seule zone image d'une deuxième couche, susceptible d'absorber un rayonnement laser ;
- un faisceau laser susceptible d'un double mouvement relatif par rapport au matériau précédent :
   * un premier mouvement rapide, selon un premier axe ;
   * un deuxième mouvement, lent par rapport au premier, selon un deuxième axe, par exemple perpendiculaire au premier ;
- des moyens de modulations de la puissance du faisceau laser en fonction de l'information à inscrire en synchronisme avec le premier mouvement ci-dessus.

De la sorte, le faisceau laser guidé à l'aide de la zone de lecture décrit la zone image où doit être formée l'image en bandes parallèles au premier axe, en y détruisant ou non la couche absorbante, faisant ainsi apparaître ou non la première couche en fonction de la puissance du faisceau et donc de l'information à inscrire. La zone de lecture ayant servi à guider l'inscription est supprimée à la fin de l'opération.

Plus précisément, l'invention a pour objet un procédé d'inscription d'image tel que défini par la revendication 1, un dispositif pour la mise en oeuvre de ce procédé, tel que défini à la revendication 2 et un dispositif support pour l'inscription selon ce procédé, tel que défini par la revendication 3.

D'autres objets, particularités et résultats de l'invention ressortiront de la description suivante, illustrée par les figures annexées, qui représentent :
- les figures 1a et 1b, différents modes de réalisation du support de l'image ;
- la figure 2, un mode de réalisation de moyens optiques d'inscription de l'image ;
- les figures 3a, 3b et 3c, des schémas explicatifs du fonctionnement du disposition selon l'invention ;
- la figure 4, un mode de réalisation de moyens électroniques de commande des moyens optiques de la figure 2, pour la mise en oeuvre du procédé selon l'invention.

Sur ces différentes figures, les mêmes références se rapportent aux mêmes éléments.

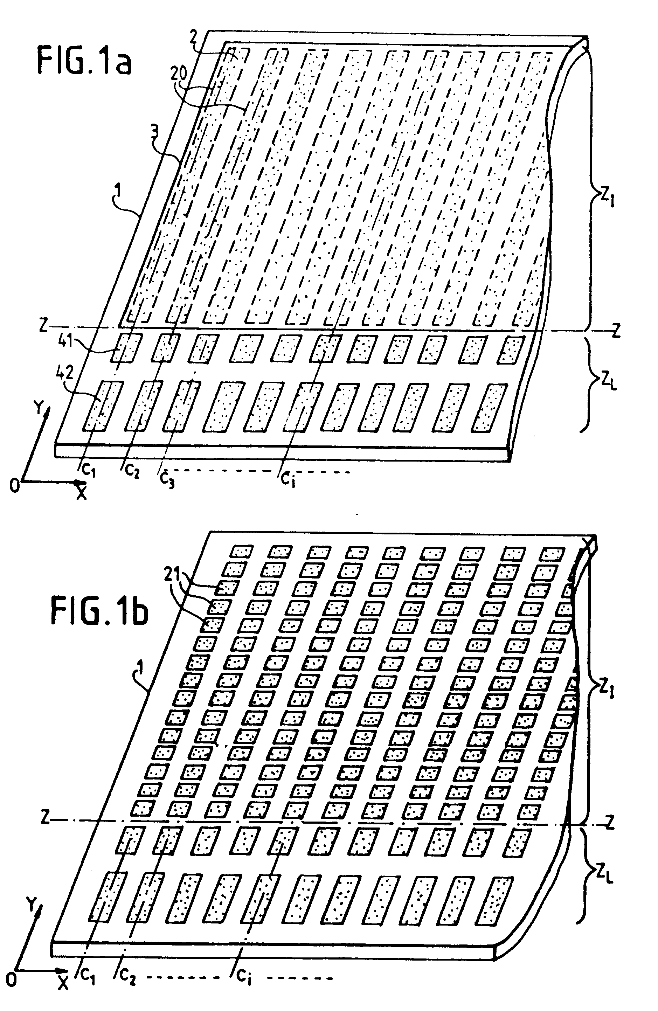

La figure 1a représente un premier mode de réalisation du support de l'image selon l'invention.

Sur cette figure, on a donc représenté un support 1, par exemple en papier, carton ou plastique, sur lequel on a défini deux zones : une zone image Z_{I} et une zone de lecture Z_{L}, séparées par un axe ZZ, parallèle à l'axe OX d'un repère orthonormé OXY. Sur la zone image Z_{I}, on a déposé un premier matériau 2 selon des bandes 20 parallèles à l'axe OY, formant ainsi des colonnes, repérées C₁, C₂, C₃ .... Cᵢ....Ce matériau 2 est par exemple une encre déposée par un procédé du type héliogravure, taille douce, offset ....

Sur la zone image Z₁ est déposée une couche 3 d'un deuxième matériau qui est choisi pour absorber un rayonnement prédéfini, tel qu'un rayonnement laser. De préférence, ce matériau 3 est caractérisé par une faible température de fusion. Il peut toutefois être préférable, pour certaines applications, que cette température ne soit pas trop basse, par exemple de l'ordre de 200°C, pour rester supérieure aux températures auxquelles sont opérées habituellement les plastifications de supports. La couche 3 est par exemple organique ou métallique. Elle peut être d'épaisseur faible, son absorption étant déterminée, pour un rayonnement donné, par sa composition et son épaisseur. A titre d'exemple, une couche de Tellure d'environ 200 Å convient.

Dans la partie du support correspondant à la zone de lecture Z_{L}, on a également déposé des bandes du premier matériau (2) selon les mêmes colonnes C₁, C₂ .... Cᵢ. Ces bandes peuvent être continues ou non ; elles sont représentées à titre d'exemple sur la figure 1a en deux motifs, repérés 41 et 42, également alignés selon les colonnes C. Il est à noter que le matériau constituant les colonnes ou les motifs de la zone de lecture Z_{L} peut être différent du matériau 2.

Pour la clarté de la figure, les surfaces des bandes 20 et des motifs 41 et 42 ont été pointillées.

La figure 1b représente une variante de réalisation de la figure précédente, différant en ce que les bandes 20 de la zone image Z_{I} sont maintenant réalisées sous forme discrète par des microsurfaces 21, alignées selon des colonnes C comme précédemment. A titre d'exemple, les microsurfaces peuvent être des carrés de 20 µm de côté.

Pour simplifier la figure, la couche 3 du matériau absorbant n'a pas été représentée.

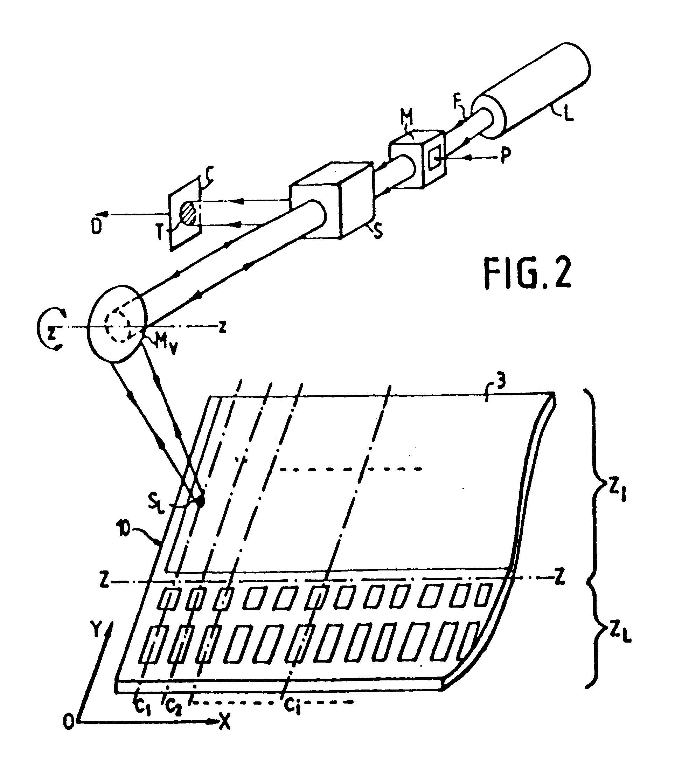

La figure 2 représente un mode de réalisation des moyens optiques d'inscription de l'image sur le support précédent.

Sur cette figure, on retrouve à titre d'exemple le dispositif décrit sur la figure 1, globalement référencé 10, comportant la zone de lecture Z_{L} et la zone image Z_{I}, cette dernière étant recouverte par le matériau absorbant 3.

Le dispositif d'inscription comporte un laser L, émettant un faisceau lumineux F vers un modulateur M. Ce dernier est commandé par un signal P, cette commande permettant de moduler la puissance du laser L en fonction de l'information à inscrire sur le dispositif 10. Sortant du modulateur M, l'énergie lumineuse est dirigée vers un miroir vibrant Mᵥ, par l'intermédiaire de moyens de séparation S. Le miroir M est susceptible d'osciller autour d'un axe zz, parallèle à l'axe OX. Le miroir M renvoit le faisceau laser F vers le dispositif 10 sur lequel il forme un spot S_{L}.

Le dispositif peut comporter en outre, si nécessaire, des moyens (non représentés) de focalisation du faisceau F sur le dispositif 10.

En fonction de la puissance du faisceau commandée par le signal P précédent, le dispositif fonctionne de l'une des deux façons suivantes :
- le premier mode de fonctionnement correspond au cas où la puissance lumineuse est faible, par exemple comprise entre 1 mW et 3 mW ;
- le deuxième mode de fonctionnement correspond à une puissance lumineuse importante, par exemple quelques dizaines de milliwatts, permettant l'ablation locale de la couche 3 et faisant ainsi apparaître le matériau 2.

L'ensemble des zones dans lesquelles le matériau 2 apparaît forme l'image recherchée.

La commande du mouvement du miroir M autour de l'axe zz permet au spot S_{L} du faisceau laser de décrire une colonne C de la zone image Z_{I}. Par ailleurs, le dispositif 10 est animé selon l'axe OX d'un mouvement de translation par rapport au dispositif optique, de sorte à permettre au faisceau laser de passer d'une colonne à la suivante. Ce mouvement peut être soit discontinu, limité au temps disponible entre les mouvements de balayage du spot selon l'axe OY, soit continu et lent par rapport au balayage selon OY, de façon à permettre une écriture en colonnes parallèles.

De la sorte, par la commande (P) du modulateur M, on inscrit une image sur la zone Z_{I}, dont la qualité est fonction des paramètres choisis notamment pour la commande de la puissance du faisceau F et des vitesses de balayage du spot S_{L}.

Dans une variante de réalisation, le support 1 est d'une couleur différente des bandes 20 ou des microsurfaces 21, afin de rendre plus difficile toute falsification : en effet, une tentative de falsification a alors une probabilité élevée de faire apparaître le support au lieu du matériau 2.

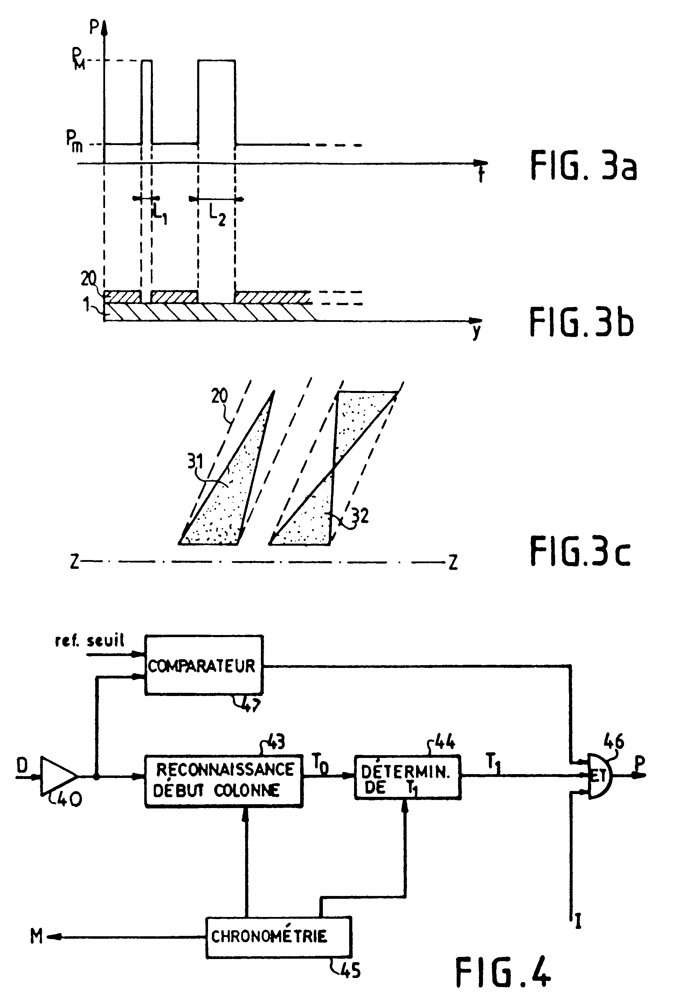

En ce qui concerne la commande du faisceau laser, différentes variantes sont possibles et sont illustrées sur les figures 3a à 3c.

Les impulsions lumineuses peuvent être de largeur constante selon une fréquence constante, l'inscription étant alors de type binaire.

Dans une variante de réalisation, les impulsions lumineuses peuvent être de largeur variable de façon à faire apparaître un motif plus ou moins étendu. C'est ce qui est illustré sur la figure 3a.

Sur cette dernière figure, on a représenté la puissance P du faisceau laser F en fonction du temps. La puissance P évolue entre un niveau minimum Pₘ et un niveau maximum P_{M}, avec une largeur d'impulsion variable (L₁, L₂ ....).

La figure 3b représente une coupe partielle du dispositif 10, réalisée selon une colonne lorsque cette dernière reçoit le faisceau laser modulé comme représenté figure 3a.

Sur cette coupe, on a représenté le substrat 1 recouvert partiellement d'une bande 20 : en effet, celle-ci subsiste lorsque la puissance du laser est au niveau minimum Pₘ et au contraire a été supprimée par le faisceau laser sur des largeurs correspondant aux largeurs d'impulsion L₁ et L₂.

Dans le cas où les colonnes sont formées de microsurfaces comme décrit figure 1b, les impulsions doivent être synchronisées par rapport à ces microsurfaces.

Dans une variante de réalisation, la puissance du faisceau laser n'évolue plus de façon binaire entre deux niveaux Pₘ et P_{M}, comme représenté sur la figure 3a, mais évolue de façon variable entre ces deux niveaux, ce qui permet de détruire plus ou moins largement la couche absorbante 3 et, ainsi, de faire apparaître des motifs par exemple sensiblement triangulaires. Cela est représenté à titre d'exemple sur la figure 3c, où l'on voit la trace de deux bandes 20 et où des motifs triangulaires 31 et 32, de différentes formes, apparaissent. Pour la clarté des dessins, seules les zones où le matériau 2 apparaît ont été pointillées.

Le faisceau laser F est ensuite partiellement réfléchi (figure 2) par le dispositif 10 vers le miroir vibrant Mᵥ puis aiguillé, par les moyens de séparation S, vers une cellule photosensible C où il forme une tache lumineuse T. La cellule C fournit un signal électrique de détection D.

Ce dernier signal est utilisé, comme montré ci-après figure 4, pour la synchronisation du balayage du dispositif 10 par le spot S_{L} avec les informations constituant l'image, formant le signal P.

A cet effet, le spot S_{L} balaye la totalité de chaque colonne C, y compris la partie située dans la zone de lecture Z_{L}. Le ou les motifs (41, 42 sur les figures 1) de la zone de lecture Z_{L} permettent la reconnaissance (repérage) du début d'une colonne. En effet, la nature des motifs 41, 42 (réfléchissant plus ou moins le faisceau que le support 1) et leur éventuelle épaisseur (provoquant en cas de surépaisseur un décentrement de la tache T sur la cellule C) provoquent des variations d'amplitude du signal de détection D, variations caractéristiques d'un début de colonne. Il est à noter que ce repérage ne peut être effectué directement sur les colonnes C de la zone image Z_{I}, les couches 20 ou 21 étant alors recouvertes par la couche absorbante 3.

Dans une variante de réalisation, les motifs 41, 42 peuvent être variables d'une colonne à l'autre, permettant ainsi en outre l'identification de chaque colonne.

La figure 4 représente un mode de réalisation des moyens électroniques de commande du dispositif selon l'invention.

Le signal électrique de détection D est, après amplification dans un amplificateur 40, transmis à un circuit 43 de reconnaissance du début de la colonne.

Sous la commande d'un dispositif de chronométrie 45, comportant notamment une horloge et des compteurs, le circuit 43 délivre un signal correspondant à l'instant T₀ de début de colonne de la zone image Z_{I}, par exemple le passage d'un signal binaire à l'état O. Ce signal est délivré à l'intention d'un circuit logique 46 du type porte ET, lui-même fournissant le signal P de commande du modulateur (M, figure 2). Dans cette réalisation, le signal indiquant l'instant T₀ passe, avant d'être transmis à la porte ET 46, dans un circuit de détermination de l'instant T₁ de fin de colonne. Cette détermination s'effectue à partir de l'instant T₀, par ajout d'une durée constante correspondant au temps de balayage de la colonne par le faisceau F ; dans cet exemple, le signal indiquant l'instant T₁ est constitué par le même signal logique passant à l'état 1. Le circuit 44 est commandé par le circuit de chronométrie 45.

Dans la variante de réalisation représentée sur la figure, le dispositif comporte encore un comparateur 47, comparant le signal de détection issu de l'amplificateur 40 à un seuil ; cela permet de détecter une éventuelle sortie du spot laser S_{L} hors d'une bande 20 : en effet, dans ce cas, la différence de pouvoir réflecteur entre le matériau 2 et le support 1 provoque une variation (par exemple une diminution) de l'amplitude du signal D. Le signal de sortie du comparateur 47 est également relié à la porte ET 46. Cette dernière reçoit encore l'information I à inscrire sur le dispositif 10, en synchronisme avec les instants T₀ et T₁, à l'aide d'une mémoire tampon par exemple.

La porte ET 46 a ainsi pour fonction d'autoriser le passage de l'information I lorsque le spot S_{L} est dans la zone image Z_{I} (entre les instants T₀ et T₁) et, le cas échéant, seulement lorsqu'il est bien aligné sur une colonne (par action du comparateur 47). Enfin, le dispositif de chronométrie 45 commande le mouvement du miroir M_{v.}

On a ainsi décrit un dispositif sur lequel il est possible d'inscrire une image à l'aide d'un faisceau laser commandé électriquement par un signal, binaire ou non, représentatif de l'image, permettant un excellent rendu, difficile à contrefaire et dont la falsification peut être rendue également difficile.

Il est à noter que la partie zone de lecture (Z_{L}) du dispositif n'est pas obligatoirement réalisée sur le même support que la zone image (Z_{I}) ; dans tous les cas, elle est séparée de cette dernière après inscription de l'image, afin de rendre impossible le repérage des colonnes C.

Il est à noter également qu'il est possible d'inscrire une image en couleurs, sous réserve de disposer dans la zone image des microsurfaces 21 (figure 1b) de couleurs différentes selon un arrangement prédéfini (par exemple en carrés comportant quatre couleurs : bleu, jaune, rouge et noir) et de commander le faisceau laser en conséquence.

La description faite ci-dessus l'a été bien entendu à titre d'exemple non limitatif et des variantes sont possibles qui entrent dans le cadre de l'invention. C'est ainsi par exemple qu'il est possible de déposer une couche supplémentaire sur la couche absorbante 3, cette couche supplémentaire étant transparente, ayant une épaisseur de l'ordre de la demi-longueur d'onde du rayonnement laser et ayant pour fonction de réaliser une adaptation entre l'air et la couche 3, limitant ainsi les réflexions à la surface de la couche 3. C'est ainsi encore qu'il a été décrit (figure 2) un mouvement du dispositif 10 par rapport aux moyens optiques mais qu'il s'agit bien entendu d'un mouvement relatif, les moyens optiques pouvant être également en mouvement, le dispositif 10 pouvant éventuellement être fixe.

## Revendications

1. Procédé d'inscription d'une image sur un dispositif support à l'aide d'un faisceau laser, caractérisé par le fait que le dispositif support comporte :
- un premier matériau (2) disposé selon des colonnes sur le support et formant deux zones, une zone image et une zone de lecture ;
- un deuxième matériau (3), absorbant, susceptible d'être détruit par le faisceau laser, disposé sur le premier matériau sur la seule zone image ; le faiseau laser étant susceptible d'un double mouvement relatif par rapport au dispositif support :
- un premier mouvement rapide, selon un premier axe (OY) ;
- un deuxième mouvement, lent par rapport au premier, selon un deuxième axe (OX) ;
le faisceau laser étant guidé sur les colonnes au moyen de la zone de lecture et la puissance du faisceau laser étant modulée en fonction de l'image en synchronisme avec le premier mouvement de sorte à détruire ou ne pas détruire le deuxième matériau, faisant ainsi apparaître ou non le premier matériau, les zones de la zone image où apparaît le premier matériau formant l'image, la zone de lecture étant supprimée après inscription.

2. Dispositif pour l'inscription selon le procédé de la revendication 1 d'une image sur un dispositif support, caractérisé par le fait qu'il comporte :
- des moyens (L) pour produire le faisceau laser (F) ;
- des moyens (M) de modulation de la puissance du faisceau laser par un signal représentatif de l'image à inscrire ;
- des moyens (Mᵥ) assurant le balayage par le faisceau laser du dispositif support selon le premier axe (0Y) ;
- des moyens de guidage du faisceau laser sur les colonnes du dispositif support 10 ;
- des moyens de synchronisation de la position du faisceau laser avec le signal représentatif de l'image à inscrire.

3. Dispositif support pour l'inscription d'une image à l'aide d'un faisceau laser par le procédé selon la revendication 1, caractérisé par le fait qu'il comporte :
- un premier matériau (2), disposé selon des colonnes sur le support et formant deux zones, la zone image et la zone de lecture ;
- un deuxième matériau (3) absorbant, déposé sur la zone image du premier matériau, l'ablation du deuxième matériau étant susceptible de laisser apparaître le premier matériau selon une configuration formant l'image ;
la zone de lecture étant susceptible d'être séparée de la zone image après inscription de l'image.

4. Dispositif support selon la revendication 3, caractérisé par le fait que le premier matériau (2) est disposé sur le matériau support (1) selon des colonnes continues (C).

5. Dispositif support selon la revendication 3, caractérisé par le fait que le premier matériau (2) est disposé sur le matériau support (1) selon des microsurfaces, (21) alignées selon les colonnes (C).

6. Dispositif support selon la revendication 5, caractérisé par le fait que les microsurfaces (21) sont de couleurs différentes, permettant ainsi l'inscription d'image en couleur.

## Claims

1. Method for inscribing an image on a backing apparatus with the aid of a laser beam, characterised in that the backing apparatus includes:
- a first material (2) arranged in columns on the backing and forming two areas, an image area and a reading area;
- a second, absorbent, material (3) which can be destroyed by the laser beam and is arranged on the first material on the image area alone;
- the laser beam being capable of a dual relative motion with respect to the backing apparatus:
- a first fast motion along a first axis (OY);
- a second motion, slow with respect to the first, along a second axis (OX);
the laser beam being guided over the columns by means of the reading area and the power of the laser beam being modulated as a function of the image in synchronism with the first motion so as to destroy or not to destroy the second material, thus exposing or not the first material, the areas of the image area where the first material is exposed forming the image, the reading area being eliminated after inscribing.

2. Apparatus for the inscribing according to the method of Claim 1 of an image on a backing apparatus, characterised in that it includes:
- means (L) for producing the laser beam (F);
- means (M) for modulating the power of the laser beam with a signal representing the image to be inscribed;
- means (Mᵥ) affording the scanning by the laser beam of the backing apparatus along the first axis (OY);
- means for guiding the laser beam over the columns of the backing apparatus (10);
- means for synchronising the position of the laser beam with the signal representing the image to be inscribed.

3. Backing apparatus for the inscribing of an image with the aid of a laser beam by the method according to Claim 1, characterised in that it includes:
- a first material (2), arranged in columns on the backing and forming two areas, the image area and the reading area;
- a second, absorbent, material (3) deposited on the image area of the first material, the ablating of the second material being capable of exposing the first material as a configuration forming the image;
the reading area being capable of being separated from the image area after inscribing the image.

4. Backing apparatus according to Claim 3, characterised in that the first material (2) is arranged on the backing material (1) in continuous columns (C).

5. Backing apparatus according to Claim 3, characterised in that the first material (2) is arranged on the backing material (1) as microsurfaces (21) aligned along the columns (C).

6. Backing apparatus according to Claim 5, characterised in that the microsurfaces (21) are of different colours, thus allowing colour image inscribing.

## Patentansprüche

1. Verfahren zur Aufzeichnung eines Bildes auf einer Trägervorrichtung mit Hilfe eines Laserstrahls, dadurch gekennzeichnet, daß die Trägervorrichtung aufweist:
- ein erstes Material (2), das entlang Spalten auf dem Träger angeordnet ist und zwei Zonen bildet, nämlich eine Bildzone und eine Lesezone;
- ein absorbierendes zweites Material (3), das beschaffen ist, daß es von dem Laserstrahl zerstört werden kann, und das auf dem ersten Material allein in der Bildzone angeordnet ist; wobei der Laserstrahl eine doppelte Bewegung in bezug auf die Trägervorrichtung ausführen kann:
- eine schnelle erste Bewegung entlang einer ersten Achse (OY);
- eine in bezug auf die erste Bewegung langsame zweite Bewegung entlang einer zweiten Achse (OX);
wobei der Laserstrahl mittels der Lesezone auf den Spalten geführt wird und die Leistung des Laserstrahls in Abhängigkeit von dem Bild synchron mit der ersten Bewegung derart moduliert wird, daß das zweite Material zerstört oder nicht zerstört wird, um das erste Material erscheinen oder nicht erscheinen zu lassen, wobei die Zonen der Bildzone, in denen das erste Material erscheint, das Bild bilden, wobei die Lesezone nach der Aufzeichnung beseitigt wird.

2. Vorrichtung zur Aufzeichnung eines Bildes auf einer Trägervorrichtung gemäß dem Verfahren des Anspruchs 1, dadurch gekennzeichnet, daß sie aufweist:
- Mittel (L) zum Erzeugen des Laserstrahls (F);
- Mittel (M) zur Modulation der Leistung des Laserstrahls durch ein Signal, daß das aufzuzeichnende Bild darstellt;
- Mittel (Mᵥ), die die Abtastung der Trägervorrichtung durch den Laserstrahl entlang der ersten Achse (OY) bewirken;
- Mittel zur Führung des Laserstrahls auf den Spalten der Trägervorrichtung 10;
- Mittel zur Synchronisierung der Position des Laserstrahls mit dem das aufzuzeichnende Bild darstellenden Signal.

3. Trägervorrichtung für die Aufzeichnung eines Bildes mit Hilfe eines Laserstrahls durch das Verfahren gemäß Anspruch 1, dadurch gekennzeichnet, daß sie aufweist:
- ein erstes Material (2), das entlang Spalten auf dem Träger angeordnet ist und zwei Zonen bildet, nämlich die Bildzone und die Lesezone;
- ein absorbierendes zweites Material (3), das auf die Bildzone des ersten Materials aufgebracht ist, wobei das Abbrennen des zweiten Materials das erste Material gemäß einer das Bild bildenden Konfiguration erscheinen lassen kann;
wobei die Lesezone nach der Aufzeichnung des Bildes von der Bildzone getrennt werden kann.

4. Vorrichtung nach Anspruch 3, dadurch gekennzeichnet, daß das erste Material (2) auf dem Trägermaterial (1) in kontinuierlichen Spalten (C) angeordnet ist.

5. Vorrichtung nach Anspruch 3, dadurch gekennzeichnet, daß das erste Material (2) auf dem Trägermaterial (1) in Mikroflächen (21) angeordnet ist, die entlang den Spalten (C) ausgerichtet sind.

6. Vorrichtung nach Anspruch 5, dadurch gekennzeichnet, daß die Mikroflächen (21) unterschiedliche Farben haben und dadurch die Bildaufzeichnung in Farbe ermöglichen.
